# EUROPÄISCHE PATENTSCHRIFT

(11) **EP 4 512 227 B1**
(45) Veröffentlichungstag und Bekanntmachung des Hinweises auf die Patenterteilung: **07.10.2026**
(21) Anmeldenummer: 24194486.7
(22) Anmeldetag: 14.08.2024
(51) Int. Cl.: A01D 78/08, A01D 78/10

(54) **HEUWERBUNGSMASCHINE UND VERFAHREN ZUR EINSTELLUNG EINES ABSTANDS EINES KREISELKÖRPERS DER HEUWERBUNGSMASCHINE ZU EINEM UNTERGRUND**
HAYMAKING MACHINE AND METHOD FOR ADJUSTING A DISTANCE FROM A ROTARY BODY OF THE HAYMAKING MACHINE TO A BASE
MACHINE DE FENAISON ET PROCÉDÉ DE RÉGLAGE D'UNE DISTANCE D'UN CORPS GYROSCOPIQUE DE LA MACHINE DE FENAISON À UN SOUS-SOL

(30) Priorität: 21.08.2023 DE 102023122251
(43) Veröffentlichungstag der Anmeldung: 26.02.2025
(73) Patentinhaber: CLAAS Saulgau GmbH, 88348 Bad Saulgau (DE)
(72) Erfinder: Kesenheimer, Linus, 88374 Hosskirch (DE); Schmitt, Mathias, 78576 Emmingen-Liptingen (DE)

(56) Entgegenhaltungen:
- EP-A1- 1 125 491
- EP-A1- 1 495 667
- EP-A1- 1 498 020
- EP-A1- 3 620 043
- EP-B1- 0 383 120
- EP-B1- 1 493 324
- DE-A1- 4 004 143
- US-A1- 2006 288 684

## Beschreibung

Die Erfindung betrifft eine Heuwerbungsmaschine nach dem Oberbegriff des Anspruchs 1. Des Weiteren betrifft die Erfindung ein Verfahren zur Einstellung eines Abstands eines Kreiselkörpers der Heuwerbungsmaschine zu einem Untergrund.

Aus der Praxis sind Heuwerbungsmaschinen hinlänglich bekannt. So sind als Schwader sowie als Wender ausgebildete Heuwerbungsmaschinen bekannt.

Aus EP 1 493 324 B1 ist eine Heuwerbungsmaschine, insbesondere zum Zetten und Wenden, mit an einem Maschinenbalken angeordneten und über Stützräder auf dem Boden abgestützten Arbeitskreiseln, bekannt, wobei der um im wesentlichen vertikale Schwenkachsen in eine Transportstellung parallel zur Fahrtrichtung schwenkbare Seitenteile aufweisende Maschinenbalken durch horizontale Schwenkachsen in Einzeltragbalken unterteilt ist, wobei alle Arbeitskreisel auf die Seitenteile verteilt sind, und wobei ein Seitenteil mindestens zwei gelenkte Stützräder aufweist, wobei die gelenkten Stützräder nach der Überführung der Seitenteile in ihre Transportstellung durch zumindest eine Steuerungsvorrichtung automatisch in Fahrtrichtung verschwenkbar sind.

EP 3 799 709 A1 offenbart eine Heuwerbungsmaschine mit einem Tragrahmen sowie mit an mindestens einem Ausleger des Tragrahmens aufgenommenen Kreiselkörpern. Die Heuwerbungsmaschine stützt sich im Betrieb über Tast- und Stützräder auf einem zu bearbeitenden Untergrund ab, wobei die Tast- und Stützräder am Ausleger des Tragrahmens angreifen. Jedes Tast- und Stützrad greift über einen Halterahmen an dem jeweiligen Ausleger an, wobei zwischen dem Ausleger und dem jeweiligen Halterahmen nach der EP 3 799 709 A1 ferner ein Achsbock angeordnet ist.

Um eine optimale Futterqualität zu gewährleisten, sollen die Kreiselkörper in der Arbeitsstellung der Heuwerbungsmaschine einen definierten Abstand vom zu bearbeitenden Untergrund aufweisen, um so einen Eintrag von Erdreich in das Erntegut zu verhindern. Aufgrund von Fertigungstoleranzen weisen jedoch die einzelnen Kreiselkörper einen unterschiedlichen Abstand zum zu bearbeitenden Untergrund auf, der bislang nicht oder nur mit großem Aufwand eingestellt werden kann.

Es besteht daher Bedarf an einer Heuwerbungsmaschine, bei welcher der Abstand der Kreiselkörper zum zu bearbeitenden Untergrund mit einfachen Mitteln eingestellt werden kann. Ferner besteht Bedarf an einem Verfahren zur Einstellung des Abstands zwischen einem Kreiselkörper der Heuwerbungsmaschine und dem Untergrund.

Aufgabe der Erfindung ist es, eine entsprechende Heuwerbungsmaschine sowie ein entsprechendes Verfahren bereitzustellen.

Diese Aufgabe wird durch eine Heuwerbungsmaschine nach Anspruch 1 und ein Verfahren nach Anspruch 5 gelöst.

Erfindungsgemäß sind zwischen einer Radachse des jeweiligen Tast- und Stützrads und dem jeweiligen Ausleger ein Radträger und ein Radzapfen angeordnet, deren Relativposition zueinander einstellbar ist.

Die zwischen der Radachse des jeweiligen Tast- und Stützrads und dem jeweiligen Ausleger angeordneten Baugruppen, nämlich der Radträger und der Radzapfen des jeweiligen Tast- und Stützrads, bilden eine verstellbare Radachsenaufnahme für das jeweilige Tast- und Stützrad. Hiermit kann ein Abstand des Kreiselkörpers, nämlich von Zinken des Kreiselkörpers, zu einem zu bearbeitenden Untergrund zuverlässig und einfach eingestellt werden, um über die ganze Arbeitsbreite der Heuwerbungsmaschine im Bereich jedes Kreiselkörpers einen definierten Abstand zum zu bearbeitenden Untergrund einzustellen und so eine unnötige Verschmutzung des Ernteguts mit Erdreich zu vermeiden.

Vorzugsweise sind der Radträger und der Radzapfen des jeweiligen Tast- und Stützrads zwischen dem Halterahmen des jeweiligen Tast- und Stützrads und einem Kreiselgetriebe des dem jeweiligen Tast- und Stützrad zugeordneten Kreiselkörpers angeordnet, wobei der Radträger am Halterahmen gelenkig angreift, und der Radzapfen am Ausleger oder Kreiselgetriebe fest angreift. Diese Anordnung von Radträger und Radzapfen, welche die verstellbare Radachsenaufnahme bereitstellen, ist besonders bevorzugt, um den Abstand zwischen einem Kreiselkörper der Heuwerbungsmaschine und dem Untergrund derselben anzupassen.

Die Relativposition zwischen Radträger und Radzapfen ist über mindestens eine Scheibe einstellbar. Dies erlaubt eine besonders einfache Verstellung der Relativposition zwischen Radträger und Radzapfen und damit Einstellung des Abstands des Kreiselkörpers zum Untergrund.

Der Radzapfen ist in einer Ausnehmung des Radträgers angeordnet, wobei die mindestens eine Scheibe in der Ausnehmung zwischen einem Boden der Ausnehmung und einer Stirnfläche des Radzapfens angeordnet ist. Auch diese Ausführung ist konstruktiv besonders einfach.

Vorzugsweise ist die Heuwerbungsmaschine als Wender ausgebildet. Die Erfindung findet vorzugsweise bei einem Wender Einsatz.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. Dabei zeigt:
- Fig. 1: eine perspektivische Ansicht einer erfindungsgemäßen Heuwerbungsmaschine,
- Fig. 2: eine Seitenansicht der erfindungsgemäßen Heuwerbungsmaschine,
- Fig. 3: ein Detail der Fig. 1 in einer ersten perspektivischen Ansicht,
- Fig. 4: das Detail der Fig. 3 in einer zweiten perspektivischen Ansicht,
- Fig. 5: das Detail der Fig. 3 in einer Vorderansicht,
- Fig. 6: den Querschnitt A-A der Fig. 5.

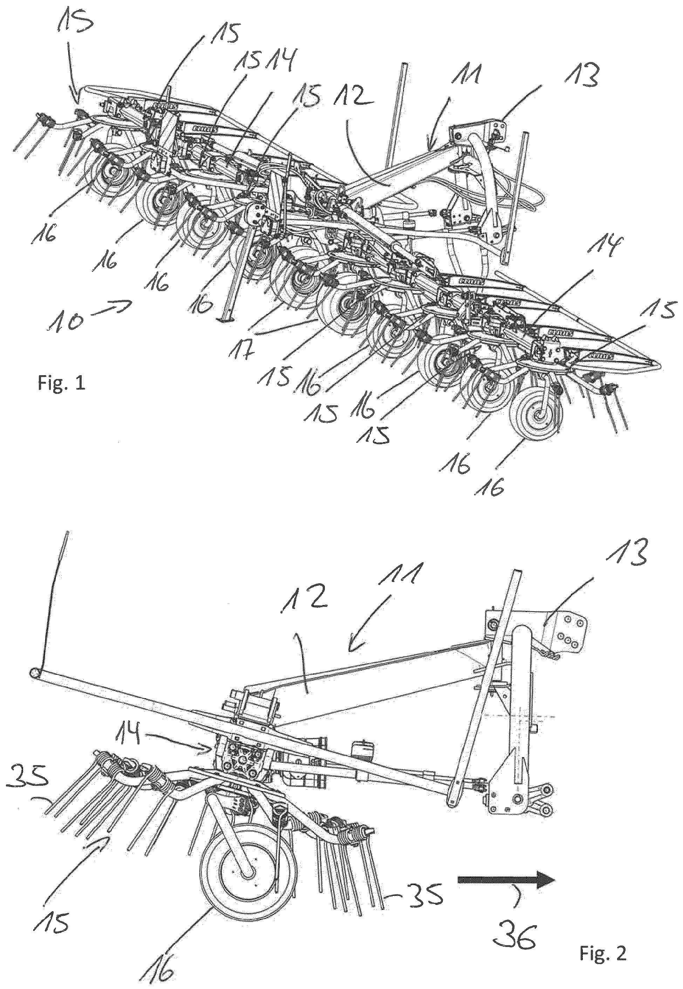

Fig. 1 zeigt eine perspektivische Ansicht und Fig. 2 eine Seitenansicht einer erfindungsgemäßen, als Wender ausgebildeten Heuwerbungsmaschine 10. Die Heuwerbungsmaschine 10 ist dabei jeweils in einer Arbeitsstellung gezeigt.

Die Heuwerbungsmaschine 10 verfügt über einen Tragrahmen 11. An einem Ende des Tragrahmens 11, nämlich an einem Längsträger 12 desselben, ist eine Ankopplungseinrichtung 13 ausgebildet, über welche die Heuwerbungsmaschine 10 an ein landwirtschaftliches Zugfahrzeug angekoppelt werden kann.

Die Heuwerbungsmaschine 10 kann von dem landwirtschaftliches Zugfahrzeug, an welches dieselbe angekoppelt ist, in einer Zugrichtung 36 über einen zu bearbeitenden Untergrund gezogen werden.

An dem Längsträger 12 des Tragrahmens 11 greifen zu beiden Seiten Ausleger 14 an. Die Ausleger 14 sind zur Überführung der Heuwerbungsmaschine 10 zwischen der in Fig. 1, 2 gezeigten Arbeitsstellung und einer nicht gezeigten Transportstellung relativ zum Längsträger 12 schwenkbar bzw. klappbar.

An jedem der Ausleger 14 des Tragrahmens 11 der Heuwerbungsmaschine 10 greifen Kreiselkörper 15 sowie Tast- und Stützräder 16 an. Jedem Kreiselkörper 15 ist dabei vorzugsweise jeweils ein Tast- und Stützrad 16 zugeordnet.

Die Kreiselkörper 15 weisen Zinken 35 auf.

Fig. 1 zeigt weiterhin Tast- und Stützräder 17, welche an den beiden mittleren Kreiselkörpern 15 angeordnet sind. Dann, wenn die Heuwerbungsmaschine 10 durch Verschwenken der Ausleger 14 in die Transportstellung überführt ist, stützt sich die Heuwerbungsmaschine 10 ausschließlich über die mittleren Tast- und Stützräder 17 auf einem Untergrund ab, die anderen Tast- und Stützräder 16 sind dann vom Untergrund abgehoben. In der in Fig. 1 gezeigten Arbeitsstellung stützt sich die Heuwerbungsmaschine 10 auch über die Tast- und Stützräder 16 auf dem Untergrund ab.

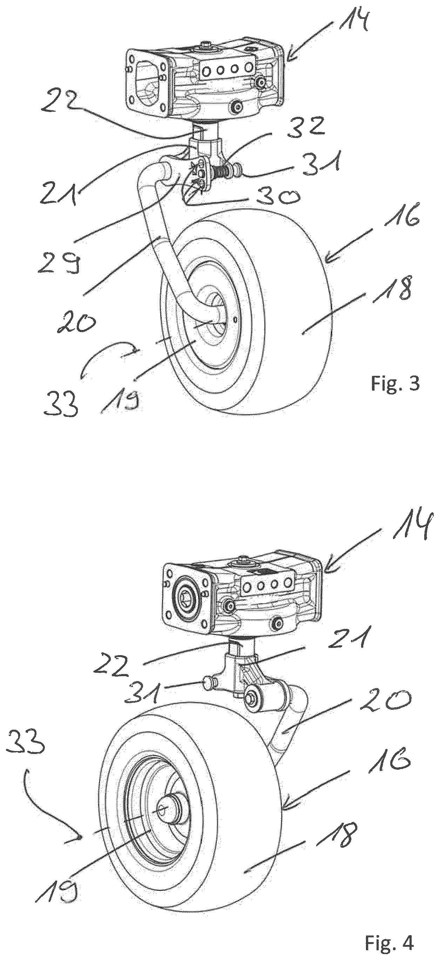

Fig. 3, 4 und 5 zeigen ein Detail der Heuwerbungsmaschine 10 im Bereich eines Tast- und Stützrads 16 sowie eines Abschnitts des Auslegers 14, an welchem das jeweilige Tast- und Stützrad 16 angreift. An diesem Abschnitt des Auslegers 14 greift auch der jeweilige Kreiselkörper 15 an, der in Fig. 3, 4 und 5 zur Gewährleistung einer einfachen Darstellung nicht gezeigt ist. Die Ausführungen zu den Tast- und Stützrädern 16 treffen auch auf die Tast- und Stützrädern 17 zu.

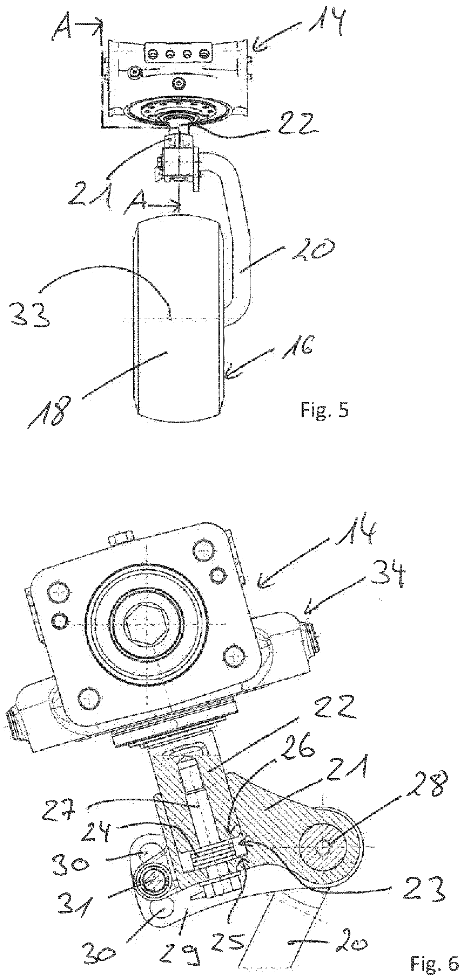

Fig. 6 zeigt ein mit dem jeweiligen Kreiselkörper zusammenwirkendes Kreiselgetriebe 34, welches dem Antreiben des jeweiligen Kreiselkörpers 15 ausgehend von einer sich durch den Ausleger 14 der Heuwerbungsmaschine 10 erstreckenden Welle dient.

Jedes der Tast- und Stützräder 16 verfügt über einen Reifen 18 sowie eine Felge 19, wobei das Tast- und Stützrad 16 an einem Halterahmen 20 drehbar gelagert ist, über welchen das jeweilige Tast- und Stützrad 16 am jeweiligen Ausleger 14 angreift. Der Halterahmen 20 ist vorzugsweise U-förmig konturiert.

Zwischen einer Radachse 33 des jeweiligen Tast- und Stützrads 16 und dem jeweiligen Ausleger 14, insbesondere zwischen dem Halterahmen 20 des jeweiligen Tast- und Stützrads 16 und einem Kreiselgetriebe 34 des dem jeweiligen Tast- und Stützrad 16 zugeordneten Kreiselkörpers 15, sind ein Radträger 21 und ein Radzapfen 22 angeordnet, deren Relativposition zueinander einstellbar ist, um über eine Änderung der Relativposition zwischen Radträger 21 und Radzapfen 22 den Abstand zwischen dem Kreiselkörper 15, insbesondere dessen Zinken 35, und einem zu bearbeitenden Untergrund einzustellen.

Gemäß Fig. 6, die den Querschnitt A-A der Fig. 5 zeigt, greift der Radzapfen 22 in eine Ausnehmung 23 im Radträger 21 ein, wobei dann, wenn der Radzapfen 22 aus der Ausnehmung 23 im Radträger 21 herausbewegt ist, mindestens eine Scheibe 24 aus der Ausnehmung 23 entfernt werden kann und/oder mindestens eine Scheibe 24 in der Ausnehmung 23 angeordnet werden kann, um die Relativposition zwischen Radträger 21 und Radzapfen 22 einzustellen und so letztendlich den Abstand zwischen dem jeweiligen Kreiselkörper 15, insbesondere dessen Zinken 35, und dem Untergrund einzustellen.

In Fig. 6 sind exemplarisch fünf übereinander gestapelte Scheiben 24 gezeigt, die allesamt eine definierte Dicke von zum Beispiel 3 mm aufweisen können. Durch die Variation der Anzahl der Scheiben 24 wird die Relativposition zwischen Radzapfen 22 und Radträger 21 eingestellt.

Die mindestens eine Scheibe 24 ist dabei zwischen einem Boden 25 der Ausnehmung 23 und einer Stirnfläche 26 des Radzapfens 22 angeordnet, wobei sich durch die in Fig. 6 gezeigten Scheiben 25 hindurch in den Radzapfen 22 hinein eine Schraube 27 erstreckt. Diese Schraube 27 erstreckt sich auch durch den Radträger 21.

Dann, wenn die Schraube 27 angezogen ist, ist die Relativposition zwischen dem Radträger 21 und dem Radzapfen 22 fixiert. Ist hingegen die Schraube 24 gelöst, so kann der Radzapfen 22 aus der Ausnehmung 23 des Radträgers 21 herausbewegt werden, um den Zugriff auf die in Fig. 6 gezeigten mehreren Scheiben 24 freizugeben und die Anzahl derselben anzupassen.

Wie am besten Fig. 6 entnommen werden kann, greift der Halterahmen 20 mit einem vom Tast- und Stützrad 16 abgewandten Ende gelenkig unter Ausbildung eines Drehgelenks 28 am Radträger 21 an. Der Radzapfen 22 greift fest am Ausleger 14 oder Kreiselgetriebe 34 an.

Insbesondere Fig. 3 und 6 zeigen als weitere Baugruppe eine mit dem Halterahmen 20 des jeweiligen Tast- und Stützrads 16 fest verbundene Lasche 29, die mehrere Ausnehmungen 30 aufweist. Abhängig von der Relativposition zwischen dieser Lasche 29 und dem Radträger 21 greift ein am Radträger 21 geführter Bolzen 31 in eine dieser Ausnehmungen 30 ein, um so einen Streuungswinkel für den jeweiligen Kreiselkörper 15 einzustellen. Ein Federelement 32 drückt dabei den Bolzen 31 in die jeweilige Ausnehmung 30 hinein, wobei der Bolzen 31 entgegen der Federkraft des Federelements 32 aus der jeweiligen Ausnehmung 30 herausbewegt werden kann, um dann durch Veränderung der Relativposition zwischen der Lasche 29 und dem Radträger 21 den Streuwinkel einzustellen.

Die Erfindung betrifft weiterhin ein Verfahren zur Einstellung eines Abstands eines Kreiselkörpers 15 der Heuwerbungsmaschine 10 zu einem Untergrund. Zur Einstellung des Abstands des jeweiligen Kreiselkörpers 15 zum Untergrund wird die Relativposition zwischen dem Radträger 21 und dem Radzapfen 22 des dem jeweiligen Kreiselkörper 15 zugeordneten Tast- und Stützrads 16 eingestellt.

Hierzu wird am jeweiligen Tast- und Stützrad 16 die jeweilige Schraube 27, welche die Relativposition zwischen Radträger 21 und Radzapfen 22 fixiert, gelöst. Anschließend kann der Radzapfen 22 aus der Ausnehmung 23 herausgezogen werden. Dann kann mindestens eine Scheibe 24 in der Ausnehmung 23 angeordnet oder aus der Ausnehmung 23 entfernt werden. Anschließend wird der Radzapfen 22 wieder in die Ausnehmung 23 des Radträgers 21 eingeführt, und die Schraube 24 angezogen, um die Relativposition zwischen Radträger 21 und Radzapfen 22 wieder zu fixieren. Zur Vergrößerung des Abstands des jeweiligen Kreiselkörpers 15 zum Untergrund wird mindestens eine Scheibe 24 in der Ausnehmung 23 angeordnet. Zur Verkleinerung des Abstands des jeweiligen Kreiselkörpers 15 zum Untergrund wird mindestens eine Scheibe 24 aus der jeweiligen Ausnehmung 23 entfernt.

Mit der Erfindung kann der Abstand zwischen den Kreiselkörpern 15 einer Heuwerbungsmaschine 10, vorzugsweise eines Wenders, und einem zu bearbeitenden Untergrund definiert eingestellt werden, um Toleranzen auszugleichen. Dies erlaubt die Gewährleistung einer hohen Qualität des Ernteguts, da vermieden werden kann, dass über die Kreiselkörper 15 bzw. über die Zinken 35 Erdreich in das Erntegut eingetragen wird. Die Erfindung ist konstruktiv einfach.

### Bezugszeichenliste

- 10: Heuwerbungsmaschine
- 11: Tragrahmen
- 12: Längsträger
- 13: Ankopplungseinrichtung
- 14: Ausleger
- 15: Kreiselkörper
- 16: Tast- und Stützrad
- 17: Tast- und Stützrad
- 18: Reifen
- 19: Felge
- 20: Halterahmen
- 21: Radträger
- 22: Radzapfen
- 23: Ausnehmung
- 24: Scheibe
- 25: Boden
- 26: Stirnfläche
- 27: Schraube
- 28: Drehgelenk
- 29: Lasche
- 30: Ausnehmung
- 31: Bolzen
- 32: Federelement
- 33: Radachse
- 34: Kreiselgetriebe
- 35: Zinken
- 36: Zugrichtung

## Patentansprüche

1. Heuwerbungsmaschine (10),
mit einem Tragrahmen (11),
mit an mindestens einem Ausleger (14) des Tragrahmens (10) aufgenommenen Kreiselkörpern (15),
mit an dem mindestens einem Ausleger (14) des Tragrahmens (10) angreifenden Tast- und Stützrädern (16, 17), die sich in der Arbeitsstellung der Heuwerbungsmaschine (10) auf dem Untergrund abstützen und die in der Transportstellung von dem Untergrund abgehoben sind,
wobei jedes der Tast- und Stützräder (16, 17) über einen Halterahmen (20) an dem jeweiligen Ausleger (14) angreift, und
zwischen einer Radachse (33) des jeweiligen Tast- und Stützrads (16, 17) und dem jeweiligen Ausleger (14) ein Radträger (21) und ein Radzapfen (22) angeordnet sind, deren Relativposition zueinander einstellbar ist, **dadurch gekennzeichnet, dass**
die Relativposition zwischen Radträger (21) und dem Radzapfen (22) über mindestens eine Scheibe (24) einstellbar ist und
der Radzapfen (22) in einer Ausnehmung (23) des Radträgers (21) angeordnet ist, wobei die mindestens eine Scheibe (24) in der Ausnehmung (23) zwischen einem Boden (25) der Ausnehmung (23) und einer Stirnfläche (26) des Radzapfens (22) angeordnet ist.

2. Heuwerbungsmaschine (10) nach Anspruch 1, **dadurch gekennzeichnet, dass** der Radträger (21) und der Radzapfen (22) zwischen dem Halterahmen (20) des jeweiligen Tast- und Stützrads (16, 17) und einem Kreiselgetriebe (34) des jeweiligen Kreiselkörpers (15) angeordnet sind, wobei der Radträger (21) am Halterahmen (20) gelenkig angreift, und wobei der Radzapfen (22) am Ausleger (14) oder Kreiselgetriebe (34) fest angreift.

3. Heuwerbungsmaschine (10) nach einem der Ansprüche 1 oder 2, **dadurch gekennzeichnet, dass** die Relativposition zwischen Radträger (21) und Radzapfen (22) über eine Schraube (27) fixierbar ist.

4. Heuwerbungsmaschine (10) nach einem der Ansprüche 1 bis 3, **dadurch gekennzeichnet, dass** dieselbe als Wender ausgebildet ist.

5. Verfahren zur Einstellung eines Abstands eines Kreiselkörpers (15) zu einem Untergrund an einer Heuwerbungsmaschine (10) nach einem der Ansprüche 1 bis 4, wobei zur Einstellung des Abstands des jeweiligen Kreiselkörpers (15) zum Untergrund die Relativposition zwischen dem Radträger (21) und dem Radzapfen (22) des dem jeweiligen Kreiselkörper (15) zugeordneten Tast- und Stützrads (16) mit folgenden Schritten eingestellt wird:
am jeweiligen Tast- und Stützrad (16, 17) Lösen einer jeweiligen Schraube (27), welche die Relativposition zwischen Radträger (21) und Radzapfen (22) fixiert,
Herausziehen des Radzapfens (22) aus einer Ausnehmung (23) des Radträger (21),
Anordnen oder Entfernen mindestens einer Scheibe (24) in oder aus der Ausnehmung (23),
Einführen des Radzapfens (22) in die Ausnehmung (23) des Radträger (21),
Anziehen der Schraube (27).

6. Verfahren nach Anspruch 5, **dadurch gekennzeichnet, dass** zur Vergrößerung des Abstands des jeweiligen Kreiselkörpers (15) zum Untergrund mindestens eine Scheibe (24) in der Ausnehmung (23) angeordnet wird.

7. Verfahren nach Anspruch 5 oder 6, **dadurch gekennzeichnet, dass** zur Verkleinerung des Abstands des jeweiligen Kreiselkörpers (15) zum Untergrund mindestens eine Scheibe (24) aus der Ausnehmung (23) entfernt wird.

## Claims

1. Haymaking machine (10)
having a load-bearing frame (11),
having rotor bodies (15) which are received on at least one extension arm (14) of the load-bearing frame (11), having feeler/support wheels (16, 17) which engage on the at least one extension arm (14) of the load-bearing frame (11) and, in the working position of the haymaking machine (10), are supported on the ground and, in the transport position, are lifted off from the ground, wherein each of the feeler/support wheels (16, 17) engages on the respective extension arm (14) via a holding frame (20), and,
between a wheel axis (33) of the respective feeler/support wheel (16, 17) and the respective extension arm (14), there are arranged a wheel carrier (21) and a wheel pin (22) whose relative position with respect to one another is settable, **characterized in that** the relative position between the wheel carrier (21) and the wheel pin (22) is settable via at least one disc (24), and
the wheel pin (22) is arranged in a clearance (23) of the wheel carrier (21), wherein the at least one disc (24) is arranged in the clearance (23) between a base (25) of the clearance (23) and an end face (26) of the wheel pin (22).

2. Haymaking machine (10) according to Claim 1, **characterized in that** the wheel carrier (21) and the wheel pin (22) are arranged between the holding frame (20) of the respective feeler/support wheel (16, 17) and a rotor gearbox (34) of the respective rotor body (15), wherein the wheel carrier (21) engages in an articulated manner on the holding frame (20), and wherein the wheel pin (22) engages in a fixed manner on the extension arm (14) or rotor gearbox (34).

3. Haymaking machine (10) according to either of Claims 1 and 2, **characterized in that** the relative position between the wheel carrier (21) and the wheel pin (22) is fixable via a screw (27).

4. Haymaking machine (10) according to one of Claims 1 to 3, **characterized in that** said haymaking machine is designed as a tedder.

5. Method for setting a distance between a rotor body (15) and a ground at a haymaking machine (10) according to one of Claims 1 to 4, wherein, for setting the distance between the respective rotor body (15) and the ground, the relative position between the wheel carrier (21) and the wheel pin (22) of the feeler/support wheel (16) assigned to the respective rotor body (15) is set by way of the following steps:
at the respective feeler/support wheel (16, 17), unscrewing a respective screw (27) that fixes the relative position between the wheel carrier (21) and the wheel pin (22),
pulling the wheel pin (22) out of a clearance (23) of the wheel carrier (21),
arranging/removing at least one disc (24) in/from the clearance (23),
introducing the wheel pin (22) into the clearance (23) of the wheel carrier (21),
tightening the screw (27).

6. Method according to Claim 5, **characterized in that**, for increasing the distance between the respective rotor body (15) and the ground, at least one disc (24) is arranged in the clearance (23).

7. Method according to Claim 5 or 6, **characterized in that**, for reducing the distance between the respective rotor body (15) and the ground, at least one disc (24) is removed from the clearance (23).

## Revendications

1. Machine de fenaison(10),
comportant un cadre support (11),
comportant des corps gyroscopiques (15) logés sur au moins un bras (14) du cadre support (11),
comportant de roues palpeuses et des roues d'appui (16, 17) qui viennent en prise avec ledit au moins un bras (14) du cadre support (11) et qui s'appuient, dans la position de travail de la machine de fenaison (10), sur le sol et qui sont soulevées du sol dans la position de transport,
chaque roue palpeuse et d'appui (16, 17) venant en prise avec le bras (14) respectif par l'intermédiaire d'un cadre de maintien (20) et
un support (21) de roue et un tourillon (22) de roue, dont la position relative l'un par rapport à l'autre est réglable, étant agencés entre un axe (33) de roue de la roue palpeuse et d'appui (16, 17) respective et le bras (14) respectif, **caractérisée en ce que**
la position relative entre le support (21) de roue et le tourillon (22) de roue est réglable par l'intermédiaire d'au moins un disque (24) et
le tourillon (22) de roue est agencé dans un évidement (23) du support (21) de roue, ledit au moins un disque (24) étant agencé dans l'évidement (23) entre un fond (25) de l'évidement (23) et une face frontale (26) du tourillon (22) de roue.

2. Machine de fenaison (10) selon la revendication 1, **caractérisée en ce que** le support (21) de roue et le tourillon (22) de roue sont agencés entre le cadre de maintien (20) de la roue palpeuse et d'appui (16, 17) respective et un engrenage gyroscopique (34) du corps gyroscopique (15) respectif, le support (21) de roue venant en prise de manière articulée avec le cadre de maintien (20) et le tourillon (22) de roue venant en prise de manière fixe avec le bras (14) ou avec l'engrenage gyroscopique (34).

3. Machine de fenaison (10) selon l'une des revendications 1 ou 2, **caractérisée en ce que** la position relative entre le support (21) de roue et le tourillon (22) de roue peut être fixée par l'intermédiaire d'une vis (27).

4. Machine de fenaison (10) selon l'une des revendications 1 à 3, **caractérisée en ce qu'**elle est conçue comme faneuse.

5. Procédé de réglage d'une distance d'un corps gyroscopique (15) par rapport à un sol sur une machine de fenaison (10) selon l'une des revendications 1 à 4, la position relative entre le support (21) de roue et le tourillon (22) de roue de la roue palpeuse et d'appui (16) associée au corps gyroscopique (15) respectif pour le réglage de la distance du corps gyroscopique (15) respectif par rapport au sol étant réglée par les étapes suivantes :
au niveau de chaque roue palpeuse et d'appui (16, 17) respective, desserrage d'une vis (27) respective qui fixe la position relative entre le support (21) de roue et le tourillon (22) de roue,
retrait du tourillon (22) de roue d'un évidement (23) du support (21) de roue,
agencement d'au moins un disque (24) dans l'évidement (23) ou enlèvement dudit disque de l'évidement, introduction du tourillon (22) de roue dans l'évidement (23) du support (21) de roue,
serrage de la vis (27).

6. Procédé selon la revendication 5, **caractérisé en ce que**, pour l'agrandissement de la distance du corps gyroscopique (15) respectif par rapport au sol, au moins un disque (24) est agencé dans l'évidement (23).

7. Procédé selon la revendication 5 ou 6, **caractérisé en ce que**, pour la diminution de la distance du corps gyroscopique (15) respectif par rapport au sol, un disque (24) est enlevé de l'évidement (23).
